Europäisches Patentamt

European Patent Office

Office européen des brevets

(11) Publication number: 0 324 992
A1

# (12) EUROPEAN PATENT APPLICATION

(21) Application number: 88200103.5

(22) Date of filing: 19.01.88

(51) Int. Cl.4: C08F 297/04 , C08L 53/02

(43) Date of publication of application:
26.07.89 Bulletin 89/30

(84) Designated Contracting States:
ES

(71) Applicant: SHELL INTERNATIONALE
RESEARCH MAATSCHAPPIJ B.V.
Carel van Bylandtlaan 30
NL-2596 HR Den Haag(NL)

(72) Inventor: Toyama, Yasuo
11-24, 2-chome Tsukuji
Chuo-ku Tokyo(JP)
Inventor: Ono, Hisao
11-24, 2-chome Tsukuji
Chuo-ku Tokyo(JP)
Inventor: Ieki, Yasuo
11-24, 2-chome Tsukuji
Chuo-ku Tokyo(JP)
Inventor: Miyachi, Takumi
11-24, 2-chome Tsukuji
Chuo-ku Tokyo(JP)

(74) Representative: Aalbers, Onno et al
P.O. Box 302
NL-2501 CH The Hague(NL)

(54) Block copolymer composition and process for the preparation thereof.

(57) Block copolymer composition containing ≥ 30% by weight of an aromatic vinyl compound-conjugated diene block copolymer having an aromatic vinyl compound content of 10-90% by weight and of formula $(A-B)_n X$, in which "A" is the aromatic vinyl compound block, "B" the conjugated diene block, n an integer ≥ 5 and X a coupling agent residue, which block copolymer yields a 25% by weight solution thereof in toluene having a viscosity at 25 °C of 50-1000 cP.

EP 0 324 992 A1

# BLOCK COPOLYMER COMPOSITION AND PROCESS FOR THE PREPARATION THEREOF

The invention relates to a block copolymer composition. The invention further relates to a process for the preparation of said block copolymer composition.

Block copolymers of an aromatic vinyl compound and a conjugated diene compound obtained by anionic polymerization in a hydrocarbon solvent with an alkyllithium compound as an initiator are thermoplastic elastomers which are nowadays much in demand because even without vulcanization they obtain great rubber elasticity, and because they can be moulded generally in a thermoplastic resin moulder, are cheap and can be reclaimed from scrap.

They find a wide range of uses as shock resistance improvers, by suitable blending with a thermoplastic resin, such as polystyrene, as soles for foot wear, such as camper shoes and casual shoes, by blending with a suitable resin, rubber, softener, filler, as tackifiers, binding agents, alphalt improvers, sheets, films and moulding materials.

However, these block copolymers (for instance, styrene-butadiene-styrene block copolymers, hereinafter to be referred to as SBS) when processed singly or in a suitable blend with a resin, softener, filler, for instance by injection moulding, are liable to much shrinking and it is hard to obtain the desired dimensions, so there is still room for improvement. For instance, when injection moulded SBS is used for shoe soles which are to form one body with the upper part, the high degree of shrinkage of SBS may cause a difference in dimension between the SBS sole part and the upper material, which will lead to deformations and bring the value of the product down.

Therefore, in the design of a metal mould for injection moulding, shrinkage of SBS must be taken into account, and the metal moulds are not interchangeable.

It is an object of the present invention to offer a block copolymer composition with excellent dimensional stability during moulding and processing and an excellent balance of mechanical properties, such as tensile strength and tensile pull, and practical properties, such as abrasion resistance, and which moreover has low shrinkage during processing, such as injection moulding.

Accordingly, the invention provides a block copolymer composition, characterized in that it contains not less than 30% by weight of an aromatic vinyl compound-conjugated diene compound block copolymer with an aromatic vinyl compound content in the range of from 10-90% by weight, represented by the general formula I

$(A-B)_nX$ (I)

in which formula A represents a polymer block in which the aromatic vinyl compound is the main component, B represents a polymer block in which the conjugated diene compound is the main component, n is an integer not less than 5 and X is a coupling agent residue, and which block copolymer yields a 25% by weight solution thereof in toluene having a viscosity at a temperature of 25 °C in the range of from 50 to 1000 cP.

The structure of the block copolymer according to the invention is represented by the general formula $(A-B)_nX$. In this formula, A is a polymer block in which the aromatic vinyl compound is the main component, the copolymer block being made up of only an aromatic vinyl compound, or of not less than 60% by weight, preferably not less than 80% by weight, of an aromatic vinyl compound and a conjugated diene compound; B is a polymer block in which the conjugated diene compound is the main component, the copolymer block being made up of only a conjugated diene compound, or of not less than 60% by weight, preferably not less than 80% by weight, of a conjugated diene compound and an aromatic vinyl compound which may be randomly coupled or form one or more so-called tapered blocks.

As the aromatic vinyl compounds, styrene, α-methylstyrene, o-, m- and p-methylstyrene, the vinylxylenes, the o-, m- and p-chlorostyrene, the dichlorostyrenes, o- m- and p-bromostyrene, the dibromostyrenes, o-, m- and p-furfuro-styrene, p-tert-butylstyrene, o-, m- and p-ethylstyrene, 1- or 2-vinylnaphthalene; of these, one or two or more may be used. Styrene is preferred.

Conjugated diene compounds which may be used are 1,3-butadiene, 2-methyl-1,3-butadiene, 2,3-dimethyl-1,3-butadiene, 2-neopentyl-1,3-butadiene, 2-chloro-1,3-butadiene, 2-cyano-1,3-butadiene, substituted linear conjugated pentadienes, linear and branched conjugated hexadienes. Of these, 1,3-butadiene is preferred.

n represents the number of branches involved in the coupling reaction and is an integer of not less than 5, preferably 5-8. When n is lower than 4, this will lead to considerable shrinkage in the block copolymer.

X is the coupling agent residue resulting from the coupling reaction.

The composition according to the present invention contains at least 30% by weight, suitably at least 50% by weight, preferably at least 70% by weight of the block copolymer of the afore-mentioned structure.

When this content is lower than 30% by weight, dimensional stability will be poor.

The block copolymer according to the present invention yields a 25% by weight solution thereof in toluene having a viscosity at a temperature of 25 °C in the range of from 50 to 1000 cP, preferably 100 to 800 cP. When the solution viscosity lies above 1000 cP, this will lead to considerable shrinkage and when it lies below 50 cP, the mechanical strength will be affected.

The total amount of bonded aromatic vinyl compound present in the afore-mentioned block copolymer of the present invention is in the range of from 10 to 90% by weight, suitably in the range of from 20 to 70% by weight, preferably in the range of from 20 to 60% by weight. If the total amount of bonded aromatic vinyl compound lies outside the afore-mentioned range, the mechanical strength will be adversely affected.

The invention further provides a process for the preparation of a block copolymer composition according to the present invention which process comprises the following steps:-

step 1:- polymerizing monomer A containing an aromatic vinyl compound as the main component in the presence of (a) a hydrocarbon solvent, (b) an organic lithium compound as an initiator and (c) an ether and/or a tertiary amine, until the polymerization is substantially terminated;

step 2:- adding monomer B containing a conjugated diene compound as the main component to the mixture formed in step 1 and continuing polymerization, and

step 3:- adding at least one coupling agent containing not less than five functional groups to the mixture formed in step 2 and allowing coupling to take place.

Exemplary coupling agents of the present invention are (dichloromethyl)trichloro silane, (dichlorophenyl)trichloro silane, 1,2-bis(trichlorosilyl) ethane, hexachloro disilane, hexachloro disiloxane, 1,2,3,4,7,7-hexachloro-6-methyldichlorosilyl-2-norbornene, octachloro trisiloxane, trichloromethyl trichlorosilane.

The solution viscosity of the block copolymer of the present invention can be controlled through the amount of organic lithium initiator added. By adding a large amount of organic lithium initiator the solution viscosity can be decreased.

The block copolymer of the present invention can be blended with the usual thermoplastic resins, rubber or additives. Exemplary thermoplastic resins are polystyrene type resins, polyethylene type resins, polypropylene type resins, polybutene type resins, poly(vinyl chloride) type resins, poly(vinyl acetate) type resins, polyamide type resins, thermoplastic polyester type resins, polyacetal type resins, polybutadiene type resins, thermoplastic polyurethane type resins, polyester type resins, polycarbonate type resins.

Exemplary rubbers are styrene-butadiene rubber, nitrile-butadiene rubber, butadiene rubber, ethylene-propylene rubber, isoprene rubber, nitrile rubber, chloroprene rubber, isobutylene-isoprene rubber, high-styrene rubber (HSR). Additives that may be used are plasticizers, such as phthalic ester compounds, fillers, such as silica, talc, glass fibre or reinforcing agents, as well as oxidation inhibitors, ultraviolet absorbers, antistatic agents, flame retardants, lubricants, blowing agents, colouring agents, pigments, cross-linking agents, cross-linking aids or mixtures thereof.

The block copolymer according to the present invention may be mixed with the above-mentioned additives, such as plasticizers and fillers, by well-known means, such as an extruder (with one or two screws), a roll, a Banbury mixer, a kneader, a Henschel mixer.

Moulding of the thermoplastic resin compositions obtained by the afore-mentioned methods may be carried out by known methods, for instance extrusion, injection moulding, mid-air moulding, compression moulding, calendering, to form practically useful mould goods, which may be galvanized or painted, as required.

Block copolymers of the present invention find a wide range of uses; they can be suitably used for sole material for foot wear, such as camper shoes, casual shoes, unit soles, or as films, sheets and all kinds of mould goods; for instance household appliances, such as television and stereo sets, vacuum cleaners, motor car parts, such as bumper parts, body pannels, side sheelds, they may be used as raw material for hot melt glues and binding agents, contact glues, spray glues, material for road pavement, waterproof sheets, pipe coating, raw material for asphalt blends and they may also be applied for daily necessities, leisure goods, toys, industrial goods, as well as for all kinds of rubber and thermoplastic resin improvers. They are very suited for use in foot wear and toys.

The present invention will now be illustrated with the aid of the following Examples. The Examples are according to the present invention, the Comparative Experiments are not.

Method of preparing the compositions

EP 0 324 992 A1

Into an autoclave with a jacket and provided with a rinsed and dried stirrer, were introduced under a nitrogen atmosphere 4,500 g of cyclohexane and 1 g of tetrahydrofuran, after which the temperature in the autoclave was brought to 70° C.

Then, a hexane solution containing 0.95 g of n-butyl-lithium was added, followed by 240 g of styrene. This was polymerized for 60 minutes. The styrene conversion was 100%. Then, 360 g of butadiene was added. followed by 60 minutes polymerization. Butadiene conversion was 100%.

Finally, a cyclohexane solution containing 0.73 g of 1,2-bis(trichlorosilyl)ethane was added and coupling was conducted over 20 minutes.

During polymerization, the temperature was kept generally at 70° C. After termination of the polymerization. 2.6-di-tert-butyl-p-cresole was added to the polymer solution, after which the cyclohexane was removed by heating to give the block copolymer, which was taken as Example 1.

Examples 2-4 and Comparative Experiments A-D were polymerized by using styrene, butadiene, coupling agent in amounts as listed in Table 1.

The solution viscosity was determined by the following method. A sample was fully dissolved with 25 %w toluene, and the viscosity found with a B type viscometer (ex Tokyo gauges) at 25° C was taken as the solution viscosity.

In Comparative Experiment A the number of branches in coupling was 6, but as its solution viscosity was above the prescribed range, its shrinkage percentage was high.

Comparative Experiments B and C had solution viscosities lying within the prescribed range, but as the number of branches was not at least 5 their shrinkage percentages were high.

In Comparative Experiment D the solution viscosity was above the prescribed range, but as the number of branches was not at least 5, its shrinkage percentage was extremely high.

The coupling efficiency of the samples was about 100% (only for Example 5 it was 48%), but for Comparative Experiment E it was only 20% and as its content of block copolymer specified by the present invention was low, its shrinkage percentage was high.


Examples 1-4 and Comparative Experiments A-D

The samples according to the Examples and those according to the Comparative Experiments were shaped by means of injection moulding (Minisuper 32) and made into prescribed test sheets and evaluated with the aid of the following methods.

(1) tensile strength, tension pull - JIS K 6301.

(2) abrasion - Taber abrasion testing machine (Toyo Precision) (abrasion wheel H-22, load 1 kg)

(3) shrinkage after moulding - in a metal mould of length 153 mm x width 25 mm x thickness 6.3 mm, a sample was formed and after 24 hours at room temperature, it was measured lengthways.

Shrinkage after moulding is represented by the following formula:

$$\frac{\text{longitudinal measure of mould (mm)} - \text{length of sample (mm)}}{\text{longitudinal measure of mould (mm)}} \times 100$$

In comparison with the known block copolymers, the shrinkage after moulding of the block copolymer composition of the present invention is very little, as will be seen from the results given in Table 2. Moreover, it has excellent mechanical strength and abrasion properties. A block copolymer in which the number of branches involved in the coupling reaction and the solution viscosity are as specified in the present invention have unprecedentedly good properties and therefore they are materials of high practical value for the industry.

4

## Table 1

| | Polymerization ingredients | | | Coupling agent | Amount added | Total bonded styrene | Solution viscosity | Number of coupling branches |
|---|---|---|---|---|---|---|---|---|
| | styrene (g) | butadiene (g) | n-butyl lithium (g) | Type | (g) | (%) | (cP) | |
| **Examples** | | | | | | | | |
| 1 | 240 | 360 | 0.95 | 1,2-bis(trichlorosilyl) ethane | 0.73 | 40 | 420 | 6 |
| 2 | 150 | 450 | 1.43 | " | 1.10 | 25 | 180 | 6 |
| 3 | 360 | 240 | 0.80 | " | 0.62 | 60 | 730 | 6 |
| 4 | 240 | 360 | 0.71 | octachlorotrisiloxane | 0.55 | 40 | 370 | 8 |
| 5[1] | 240 | 360 | 0.95 | 1,2-bis(trichlorosilyl) ethane | 0.36 | 40 | 360 | 6 |
| **Comp. Expermnt.** | | | | | | | | |
| A | 240 | 360 | 0.65 | 1,2-bis(trichlorosilyl ethane | 0.50 | 40 | 1.200 | 6 |
| B | 150 | 450 | 0.84 | silicon tetrachloride | 0.55 | 25 | 380 | 4 |
| C | 360 | 240 | 0.72 | " | 0.47 | 60 | 800 | 4 |
| D | 300 | 300 | 0.93 | dibromo ethane | 1.36 | 50 | 2.300 | 2 |
| E[2] | 240 | 360 | 0.95 | 1,2-bis(trichlorosilyl) ethane | 0.15 | 40 | 330 | 6 |

1) coupling efficiency 48%
2) coupling efficiency 20%

EP 0 324 992 A1

Table 2

| | Tensile strength (Kgf/cm$^2$) | Tension pull (%) | Abrasion (g/1000r) | Shrinkage after moulding (%) |
|---|---|---|---|---|
| Example | | | | |
| 1 | 245 | 760 | 0.22 | 0.1 |
| 2 | 185 | 940 | 0.17 | 0.1 |
| 3 | 320 | 660 | 0.26 | 0.3 |
| 4 | 270 | 810 | 0.25 | 0.1 |
| 5 | 130 | 650 | 0.29 | 0.4 |
| Comparative Experiment | | | | |
| A | 290 | 680 | 0.31 | 0.7 |
| B | 160 | 890 | 0.33 | 1.0 |
| C | 320 | 570 | 0.40 | 1.5 |
| D | 275 | 570 | 0.37 | 3.0 |
| E | 90 | 510 | 0.43 | 0.9 |

**Claims**

1 A block copolymer composition, characterized in that it contains not less than 30% by weight of an aromatic vinyl compound-conjugated diene compound block copolymer with an aromatic vinyl compound content in the range of from 10-90% by weight, represented by the general formula I

$(A-B)_nX$ (I)

in which formula A represents a polymer block in which the aromatic vinyl compound is the main component, B represents a polymer block in which the conjugated diene compound is the main component, n is an integer not less than 5 and X is a coupling agent residue, and which block copolymer yields a 25% by weight solution thereof in toluene having a viscosity at a temperature of 25 °C in the range of from 50 to 1000 cP.

2. A block copolymer composition as claimed in claim 1 in which in the general formula I blok A has a content of not less than 80% by weight of aromatic vinyl compound and blok B has a content of nct less than 80% by weight of conjugated diene compound.

3. A block copolymer composition as claimed in claim 1 or 2 in which the aromatic vinyl compound is styrene and the conjugated diene compound is 1,3-butadiene.

4. A block copolymer composition as claimed in any one of the preceding claims in which n in the general formula I is an integer in the range of from 5 to 8.

5. A block copolymer composition as claimed in any one of the preceding claims which contains at least 70% by weight of the block copolymer of the general formula I.

6. A block copolymer composition as claimed in any one of the preceding claims which yields a 25% by weight solution in toluene having a viscosity at a temperature of 25 °C in the range of from 100 to 800 cP.

7. A block copolymer composition as claimed in any one of the preceding claims in which the block copolymer has a content of aromatic vinyl compound in the range of from 20 to 60% by weight.

8. An article whenever containing a block copolymer composition as claimed in any one of the preceding claims.

9. A process for the preparation of a block copolymer composition as claimed in any one of claims 1 to 7 which process comprises the following steps:-

step 1:- polymerizing monomer A containing an aromatic vinyl compound as the main component in the presence of (a) a hydrocarbon solvent, (b) an organic lithium compound as an initiator and (c) an ether and/or a tertiary amine, until the polymerization is substantially terminated;

step 2:- adding monomer B containing a conjugated diene compound as the main component to the mixture formed in step 1 and continuing polymerization, and

step 3:- adding at least one coupling agent containing not less than five functional groups to the mixture formed in step 2 and allowing coupling to take place.

European Patent Office

**EUROPEAN SEARCH REPORT**

Application Number

EP 88 20 0103

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-1 534 150  (BASF) <br> * Whole document * <br> --- | 1-5,7-9 | C 08 F 297/04 <br> C 08 L  53/02 |
| X | US-A-4 405 754  (MOCZYGEMBA et al.) <br> * Column 4, lines 30-32; column 3, lines 11-34 * <br> --- | 1-5,7-9 | |
| A | US-A-4 408 006  (MILKOVICH et al.) <br> * Claims 1,2; column 3, lines 1-15 * <br> --- | 1,3,4,7 -9 | |
| A | FR-A-2 201 301  (GOODYEAR) <br> ----- | | |

TECHNICAL FIELDS SEARCHED (Int. Cl.4)

C 08 F
C 08 L

The present search report has been drawn up for all claims

| Place of search | Date of completion of the search | Examiner |
|---|---|---|
| THE HAGUE | 15-09-1988 | MEULEMANS R.A.M.G.G. |

CATEGORY OF CITED DOCUMENTS

X : particularly relevant if taken alone
Y : particularly relevant if combined with another
. . document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)